# EUROPÄISCHE PATENTANMELDUNG

(11) **EP 1 255 086 A2**
(43) Veröffentlichungstag der Anmeldung: **06.11.2002**
(21) Anmeldenummer: 02009652.5
(22) Anmeldetag: 29.04.2002
(51) Int. Cl.: F24H 1/43, F24H 8/00, F24H 9/20

(54) **Aluminium-Heizpatrone für eine Heizeinrichtung und Verschleisserkennungsverfahren**

(30) Priorität: 03.05.2001 DE 10121635
(71) Anmelder: HeaTec Thermotechnik GmbH, 73066 Uhingen (DE)
(72) Erfinder: Schwarz, Hans-Joachim, Dr., 70190 Stuttgart (DE)
(74) Vertreter: Patentanwälte Rüger, Barthelt & Abel

(57) **Zusammenfassung**

Eine Brennwert-Heizeinrichtung (1) weist einen Wärmetauscher (5) auf, der vollständig aus Aluminium besteht. Die Wandung des Heizkanals (14) ist so gestaltet, dass der Heizkanal freie Strömungsteilquerschnitte (14a) und Aufnahmetaschen oder Toträume (14b, 14c) für Aluminiumverbindungen aufweist, wie sie durch sauren korrosiven Angriff des anfallenden Kondensats entstehen. Die Taschen oder Toträume (14b, 14c) sind so angeordnet, dass sie im Wesentlichen Teil des während der Lebensdauer des Wärmetauschers (5) anfallenden voluminösen Reaktionsprodukte aufnehmen. Dazu beträgt der Wandungsabstand benachbarter Windungen des Rippenrohrs etwa 20 bis 30 mm. Außerdem ist der kleinste freie Strömungsteilquerschnitt im Verhältnis zu der Wandungsstärke des Heizkanals der zugleich die Wandungsstärke des Rippenrohrs ist, so festgelegt, dass der freie Strömungsteilquerschnitt durch die Aluminium-Reaktionsprodukte signifikant verengt ist, bevor die Wandung von dem Kondensat durchgeätzt ist.

Das Erreichen der Verschleißgrenze wird durch Überwachen der Abgastemperatur ermöglicht. Alternativ kann der Druckabfall über dem Heizkanal (14) überwacht werden.

## Beschreibung

Die Erfindung betrifft eine Heizpatrone für eine Heizeinrichtung mit den Merkmalen des Oberbegriffs des Patentanspruchs 1 sowie eine Heizeinrichtung mit einer solchen Heizpatrone und ein Verfahren zur Verschleißerkennung der Heizpatrone.

Heizeinrichtungen dienen der Erzeugung von Warmwasser durch Ausnutzung der Wärme von Verbrennungsgasen, wobei die Verbrennungsgase in einem Heizkanal bewusst unter ihre Taupunkttemperatur abgekühlt werden oder in anderen Fällen gelegentlich unter ihren Taupunkt geraten können. Verbrennungsgase, die durch Verbrennung fossiler Brennstoffe wie Gas oder Öl entstehen, enthalten Wasserdampf, der bei Unterschreitung des Taupunkts in den Heizkanälen zumindest teilweise kondensiert und sich als Kondensat (Wasser) niederschlägt. Bei der Verbrennung entstehen in der Regel weitere Verbindungen, die sich in dem Kondensat lösen, wodurch dieses stark sauer wird. Beispielsweise enthalten die Verbrennungsgase Stickoxide und je nach Schwefelgehalt des Brennstoffs auch Schwefeldioxid. Entsprechend ist das Kondensat ein aggressives Gemisch verschiedener Säuren. In heißem Zustand greift dieses saure Gemisch die Wandung des Heizkanals an. Ist dieser beispielsweise aus Edelstahl ausgebildet, kann nach einiger Zeit Lochfraß zu beobachten sein. Ein solcher Verschleiß kann zum vorzeitigen Ausfall einer Heizschlange führen. Ist die Wandung, die den Heizkanal von dem Fluidkanal trennt, durchgefressen, wird die Heizschlange undicht und die betreffende Heizeinrichtung unbrauchbar. Bei Ölbetrieb kommen außerdem Ablagerungen hinzu, z.B. ölige Ablagerungen, Ruß usw.

Es ist Ziel der Erfindung, einen Wärmetauscher für eine Heizeinrichtung zu schaffen, der regelmäßig eine hohe Lebensdauer hat. Außerdem ist es Ziel der Erfindung, eine Möglichkeit zu schaffen, einen Verschleiß des Wärmetauschers rechtzeitig zu erkennen, bevor dieser undicht wird.

Der erfindungsgemäße Wärmetauscher weist einen Heizkanal auf, der wenigstens abschnittsweise eine aus Aluminium oder einer Aluminiumlegierung bestehende Wandung aufweist. Diese reagiert mit dem sauren Kondensat oder agressiven Gasbestandteilen (SO₂)unter Bildung von Aluminiumhydroxid und weiteren Aluminiumverbindungen. Die Auflösungsreaktion der Wandung erfolgt flächig, dabei aber relativ langsam. Die entstehenden Aluminiumverbindungen entstehen, sind jedoch meist wenigstens etwas mobil. Es zeigt sich, dass sich die sich ausbildenden Aluminiumverbindungen vor allem in Ecken und Toträumen ablagern, in denen geringe Strömungsgeschwindigkeiten herrschen. Nachdem solche Ecken und Winkel wenig zur Strömungsdurchlässigkeit des Heizkanals beitragen, nimmt der Strömungswiderstand des Heizkanals dadurch zunächst nicht oder kaum, jedenfalls nicht merklich, zu. Damit führt der kaum zu vermeidende Wandverschleiß des Heizkanals zunächst zu keinerlei Funktionsbeeinträchtigung - weder zu einer Verschlechterung des Wärmeübergangs durch Bedeckung der Wand noch zu einer Verstopfung des Heizkanals des Wärmetauschers. Dies ist zumindest zu einem gewissen Teil auf die Mobilität der entstehenden Reaktionsprodukte zurück zu führen, die in gewissem Maße wasserlöslich sind und bevorzugt an ruhigen Stellen des Heizkanals abgelagert werden. Auch sonstige Ablagerungen (Ruß) werden größtenteils in die Toträume verfrachtet. Diese tragen wegen der hier vorhandenen geringen Relativgeschwindigkeit zwischen Heizgas und Wandung aber nur wenig zu dem Wärmeübergang zwischen Heizgas und Wärmeträgerfluid bei. Sie werden als Aufnahmetaschen (Speicherräume) für die Reaktionsprodukte genutzt.

Es hat sich weiter gezeigt, dass die Ausbildung der Wandung aus einer Aluminiumlegierung deshalb korrosionsgünstig ist, weil der korrosive Angriff flächig und gleichmäßig erfolgt. Es ist deshalb vorteilhaft, die Wandung des Heizkanals vollständig aus Aluminium oder einer Aluminiumlegierung auszubilden. Mit dem Verschleiß der Wandung wird diese nach und nach abgetragen nicht jedoch durchlöchert. Ein solcher Wärmetauscher hat deshalb eine seiner Wandungsstärke entsprechende Lebensdauer. Vorzeitiger Verschleiß oder Ausfall durch Lochfraß ist nahezu ausgeschlossen.

Insbesondere bei Ölbrennern kann es dagegen vorteilhaft sein, die Innenwandung des Wärmetauschers aus Edelstahl zu fertigen. Dieser widersteht der konzentrierten Flamme des Ölbrenners. zusätzliche Probleme durch die Kombination von Aluminium und Edelstahl an dem Wärmetauscher sind nicht festgestellt worden.

Bei einer besonders bevorzugten Ausführungsform der Erfindung ist die Wandungsstärke des Heizkanals relativ groß und der freie Strömungsquerschnitt des Heizkanals relativ klein. Das Verhältnis zwischen freiem Strömungsquerschnitt und der Wandungsstärke ist dabei kleiner als sein Maximalwert der so festgelegt ist, dass der Strömungsquerschnitt durch die Reaktionsprodukte signifikant, d.h. über eine vorgegebene Grenze hinaus verengt ist, bevor die Wandung unter eine gegebene Mindeststärke geschwächt ist. Beispielsweise ist der Strömungsquerschnitt so eng und die Wandungsstärke so groß, dass der Heizkanal nahezu geschlossen ist, bevor die Wandung durchgefressen ist. Die Reaktionsprodukte, die ein größeres Volumen haben als das von der Wandung abgelöste Material, verlegen somit nach und nach den Strömungsquerschnitt ohne dass der Wärmetauscher dabei unbrauchbar würde. Zunächst werden die Speicherräume mit Ablagerungen und Reaktionsprodukten gefüllt. Erst wenn diese voll sind und die weitere Verengung des Strömungsquerschnitts ein zulässiges Maß überschreitet, ist die Verschleißgrenze erreicht. Bis zum Erreichen dieser Verschleißgrenze, oder zumindest bis kurz davor, hat der Wärmetauscher seinen gewünschten hohen Wirkungsgrad.

Der Heizkanal ist vorzugsweise mehrfach verzweigt und weist Abschnitte mit hoher und mit niedriger Strömungsgeschwindigkeit auf, so dass sich die entstehenden Reaktionsprodukte in den reichlich vorhandenen Räumen mit niedriger Strömungsgeschwindigkeit sammeln können ohne den Wirkungsgrad des Wärmetauschers zu beeinträchtigen. Vorzugsweise kann der Wärmetauscher durch eine aus einem Rippenrohr bestehende Rohrschlange gebildet werden, die beispielsweise schraubenförmig aufgewickelt ist. Die Rohrschlange kann dabei um eine beispielsweise zylindrische Innenwand gewickelt sein und von einer Außenwand umschlossen sein. Der von der Rohrschlange eingenommene Zwischenraum wird von der Rohrschlange nur zum Teil ausgefüllt. Die verbleibenden Freiräume können den Heizkanal bilden. Zwischen benachbarten Rohrschlangenwindungen vorhandene Zwischenräume bilden die Speicherräume.

Zur Verschleißerfassung kann auf eine Erfassung der Strömung in dem Heizkanal zurück gegriffen werden. Beispielsweise kann der Strömungswiderstand des Heizkanals mittels einer Druckerfassungseinrichtung überwacht werden. Wird der Heizkanal durch einen Gebläsebrenner mit Verbrennungsgasen beaufschlagt, nimmt der Druck am Eingang des Heizkanals zu, sobald der Strömungswiderstand ein zulässiges Maß überschreitet, d.h. sobald der Heizkanal zu weit verengt ist.

Alternativ kann die Abgastemperatur des den Heizkanal verlassenden Abgases mittels einer Temperaturerfassungseinrichtung überwacht werden. Nimmt die Abgastemperatur über eine zulässige Grenze hinaus zu, ist davon auszugehen, dass sich in dem Heizkanal so viele Reaktionsprodukte angesammelt haben, dass nun auch stärker durchströmte Bereiche von den Reaktionsprodukten bedeckt werden und der Strömungsquerschnitt soweit verengt ist, dass die Verbrennungsgase nicht mehr ausreichend lange in dem Heizkanal verweilen. Der Anstieg der Abgastemperatur zeigt einen Abfall des Wirkungsgrads und somit das Ende der Lebensdauer des Wärmetauschers an. An dem Ausgang des Wärmetauschers ist in der Regel ohnehin ein Temperatursensor angeordnet, um die Temperatur des anfallenden Abgases zu überwachen. Dieses soll in der Regel eine Temperatur von 85°C nicht übersteigen, um Abgasleitungen und - bei kondensierendem Betrieb - Abwasserleitungen zu schonen. Somit ist die Erfassung des Lebensdauerendes des Wärmetauschers ohne zusätzlichen messtechnischen Aufwand möglich.

Eine vorteilhafte Ausführungsform der erfindungsgemäßen Heizeinrichtung weist somit eine Überwachungseinrichtung zur Erkennung des Lebensdauerendes des Wärmetauschers auf. Diese Überwachungseinrichtung erfasst den tatsächlichen Verschleißzustand. Dazu dient das erfindungsgemäße Verschleißerkennungsverfahren, demgemäß der Heizkanal während der Lebensdauer des Wärmetauschers nicht gereinigt wird. Entsprechend weist der Heizkanal auch keinerlei Reinigungsöffnungen oder dergleichen Möglichkeiten zur Reinigung auf - im Gegenteil - diese soll ausgeschlossen werden. Jedoch wird die Durchlässigkeit des Heizkanals überwacht z.B. indem der Druckabfall des Heizkanals oder die Abgastemperatur an seinem Ausgang überwacht werden. Damit lässt sich sicher überwachen, ob der Wärmetauscher seinen ordnungsgemäß hohen Wirkungsgrad erbringt. Außerdem kann der Wärmetauscher als verschlissen erkannt werden bevor er undicht wird. Diese Maßnahme trägt zur Betriebssicherheit der Anlage und zur Vermeidung unangemessen kurzer Wartungsintervalle bei.

Vorteilhafte Einzelheiten von Ausführungsformen der Erfindung ergeben sich aus der Beschreibung, der Zeichnung oder Unteransprüchen.

In der Zeichnung ist ein Ausführungsbeispiel der Erf findung veranschaulicht. Es zeigen:
- Figur 1: eine Heizeinrichtung nach dem Brennwertprinzip in schematischer Darstellung,

- Figur 2: den Wärmetauscher der Heizeinrichtung nach Figur 1 in längs geschnittener, schematischer Darstellung,
- Figur 3: den Wärmetauscher nach Figur 2 in einer ausschnittsweisen geschnittenen Darstellung in einem anderen Maßstab,
- Figur 4: den Wärmetauscher nach Figur 2 und 3 in quergeschnittener, ausschnittsweiser Darstellung,
- Figur 5: den Verlauf des Wirkungsgrads und der Abgastemperatur der Heizeinrichtung nach Figur 1 über der Zeit als Diagramm,
- Figur 6: einen verschlissenen Wärmetauscher nach Figur 3.
- Figur 7: einen alternativen Wärmetauscher für die Heizeinrichtung nach Figur 1 in längs geschnittener, schematischer Darstellung, und
- Figur 8: einen Wärmetauscher für Ölbetrieb für eine Heizeinrichtung ähnlich Figur 1 in längs geschnittener, schematischer Darstellung.

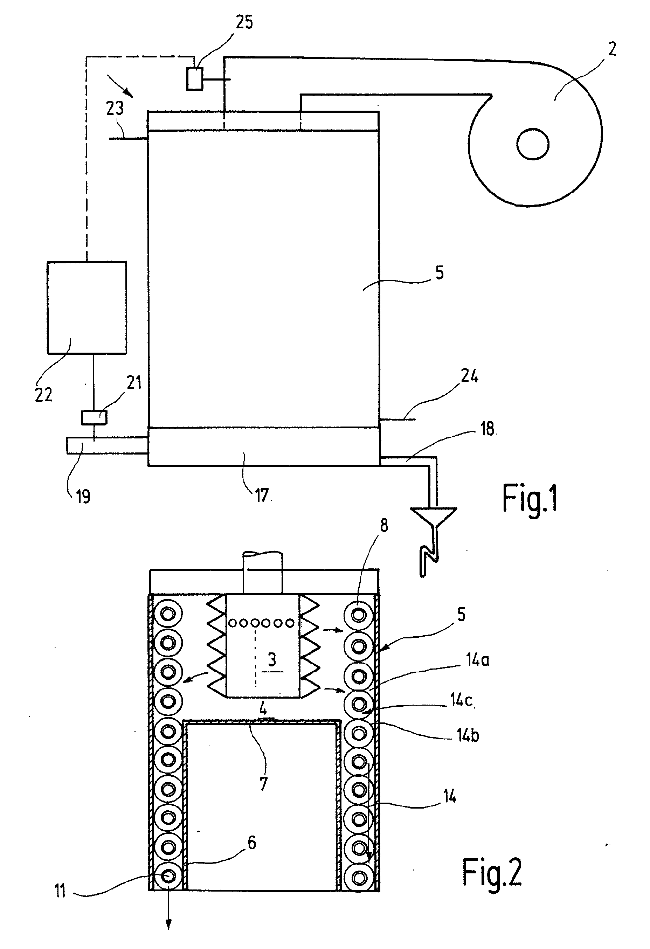

In Figur 1 ist eine Heizeinrichtung 1 veranschaulicht, die eine hohe Energieausnutzung aufweist. Eine Gebläseeinrichtung 2 fördert ein Brennstoff-Luft-Gemisch (z.B. ein Gas-Luft-Gemisch) zu einem aus Figur 2 ersichtlichen Brenner 3, der in einem Innenraum eines Wärmetauschers 5 angeordnet ist. Der Brenner 3 ist ein Gas-Strahlungsbrenner (Flächenbrenner), der insbesondere bei Teillast oder Niedriglast einen hohen Anteil seiner Wärmeerzeugung als Strahlungswärme abgibt.

Der Wärmetauscher 5 dient zur Übertragung der bei der Verbrennung eines Brennstoff-Luft-Gemischs erzeugten Abgaswärme auf ein Wärmeträgerfluid, z.B. Wasser. Die Verbrennungsgase werden dabei unter ihren Taupunkt abgekühlt (Brennwertprinzip), so dass die in dem bei der Verbrennung entstehenden Wasserdampf enthaltene Wärmeenergie auf das Wärmeträgerfluid übertragen wird.

Der Wärmetauscher 5 weist eine beispielsweise zylindrische Wandanordnung 6 auf, die durch einen dünnwandigen Hohlzylinder aus Aluminium gebildet ist. Die Wandanordnung 6 ist an ihrer oberen Stirnseite mit einer Stirnwand 7 versehen, die den Innenraum 4 nach unten hin in Axialrichtung abschließt. Die Stirnwand 7 ist vorzugsweise ebenfalls aus Aluminium.

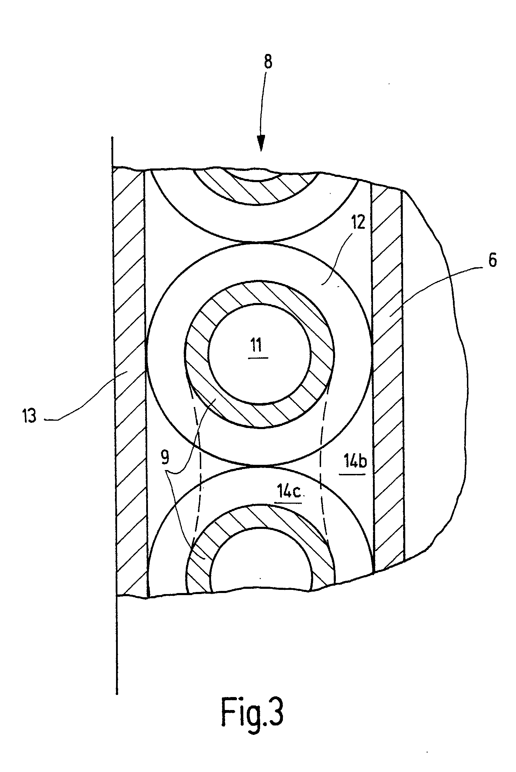

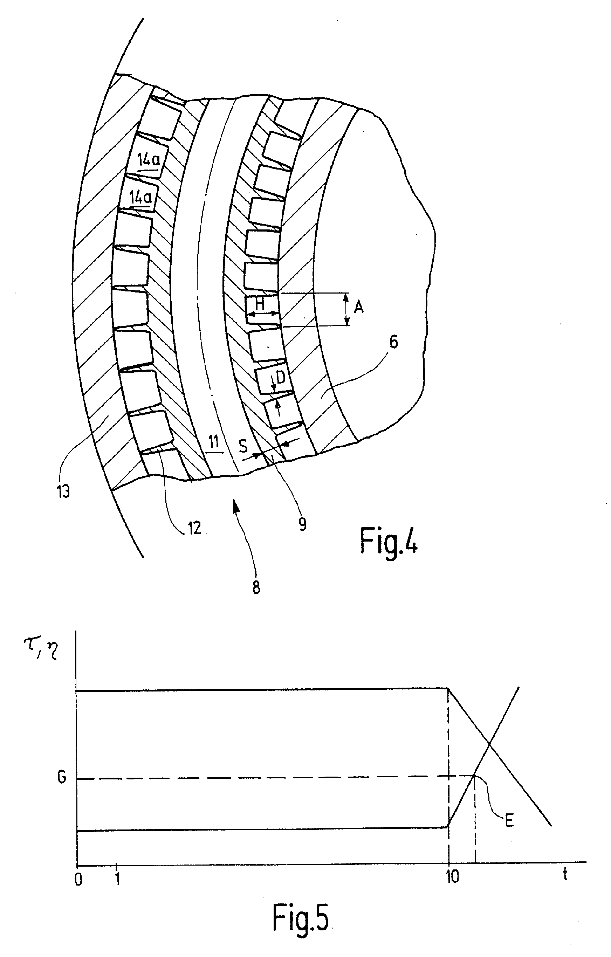

Die Wandanordnung 6 ist von einer Heizschlange 8 umgeben, die, wie aus den Figuren 3 und 4 hervorgeht, durch ein schraubenförmig gewundenes Rippenrohr 9 gebildet ist. Die Heizschlange 8 setzt sich über die Stirnwand hinaus nach oben in den Bereich des Brenners 3 fort und bildet somit die äußere Begrenzung des Innenraums 4. Das Rippenrohr 9 umschließt einen Fluidkanal 11, der von dem zu erwärmenden Wärmeträgerfluid (z.B. Wasser) durchströmt wird. An seiner Außenseite ist das Rippenrohr 9 mit scheibenförmigen Rippen 12 versehen, die z.B. einstückig an dem Rippenrohr 11 ungeformt oder als separate Elemente auf dieses aufgesetzt sind. Die Rippen 11 bestehen, wie das Rippenrohr 9, aus Aluminium oder einer Aluminiumlegierung und haben vorzugsweise die gleich chemische Zusammensetzung wie das übrige Rippenrohr 9. Bei einer bevorzugten Ausführungsform beträgt der Abstand A zwischen benachbarten Rippen 4 bis 6 mm. Die Rippen weisen vorzugsweise eine Dicke D von 1 bis 2 mm, beispielsweise 1,5 mm, auf. Sie können bedarfsweise jedoch auch dicker sein, beispielsweise 3 mm. Die radiale Höhe H der einzelnen Rippen liegt vorzugsweise bei 12 mm, sie kann jedoch auch verringert sein wenn dies gewünscht wird. Die Stärke der Rohrwand S ist vorzugsweise 3 mm oder größer. Die Wandanordnung 6 hat ebenfalls eine relativ große Stärke von mindestens 3 mm oder mehr.

Die Rippen 12 stehen im Bereich des Innenraums 4 nach innen hin auf den Brenner 3 vor. In dem unter der Stirnwand liegenden Bereich stoßen sie an die Wandanordnung 6 an. Vorzugsweise sind sie an die Wandanordnung 6 fest angepresst. An ihrem Außenumfang ist die Heizschlange 8 von einer äußeren Wandanordnung 13 umgeben, die als dünnwandiger Hohlzylinder ausgebildet ist. Sie besteht vorzugsweise aus Aluminium und liegt an den Rippen 12 vorzugsweise im Presssitz an. Ihre Wandstärke ist vorzugsweise etwa so groß wie die Stärke S der Wandung des Rippenrohrs 9.

Zwischen den Wandanordnungen 6, 13 und den Rippenrohren 9 ist ein durch die Rippen 12 mehrfach unterteilter Zwischenraum ausgebildet, der einen Konvektions-Heizkanal 14 bildet. Dies unabhängig davon, ob die Rippen 12, wie oben erläutert, scheibenförmig ausgebildet sind oder, wie es alternativ auch möglich ist, ob die Rippen 12 nach Art eines Gewindes als fortlaufender Steg ausgebildet ist, der sich um das Rippenrohr 9 windet.

Die den Konvektions-Heizkanal 14 umgebende Wandung wird somit durch die Wandanordnung, die Wandanordnung 13 und die Außenseite der Rippenrohre 9 gebildet. Diese Wandung besteht vollständig aus Aluminium oder einer Aluminiumlegierung. Insbesondere die den Heizkanal 14 von dem Fluidkanal 11 trennende Wand ist relativ dick ausgebildet (vorzugsweise dicker als 3 mm), um einen Übertritt von Wärmeträgerflüssigkeit in den Heizkanal 14 in Folge von Korrosion sicher auszuschließen.

Der Heizkanal 14 ist, wie aus Figur 2 ersichtlich ist, unmittelbar an den Innenraum 4 angeschlossen. Sein Eintritt wird durch die nach innen hin offenen Zwischenräume der Heizschlange 8 gebildet. An der unteren Stirnseite des Wärmetauschers 5 treten die abgekühlten Verbrennungsgase an einem Ausgang 16 des Wärmetauschers 5 aus. Zum Sammeln der Abgase ist eine aus Figur 1 ersichtliche Auffangschale 17 vorgesehen, die für Brennwertbetrieb einen Kondensatabfluss 18 aufweisen kann und die einen Abgasanschluss 19 aufweist. An dem Abgasanschluss 19 oder alternativ an dem Kondensatanschluss 18 ist ein Temperaturfühler 21 angeordnet, der an eine Überwachungsschaltung 22 angeschlossen ist.

Der Fluidkanal 11 des Rippenrohrs 9 verbindet einen Wärmeträgervorlaufanschluss 23 mit einem Wärmeträgerrücklaufanschluss 24 die beispielsweise zu einem Heizungssystem gehören.

Wie aus Figur 2 ersichtlich, führt der Heizkanal 14 durch den Wärmetauscher 5 etwa vertikal von oben nach unten. Aus Figur 4 lässt sich somit ein Ausschnitt aus dem Querschnitt des Heizkanals 14 erkennen. Es wird ersichtlich, dass der gesamte Strömungsquerschnitt des Heizkanals 14 durch die Summe aller zwischen benachbarten Rippen 12 eingeschlossenen Teilflächen 14a gebildet ist. Jede Teilfläche 14a bildet einen einzelnen kleinsten freien Strömungsteilquerschnitt des Heizkanals. Dieser kleinste freie Strömungsteilquerschnitt 14a ist etwa trapezförmig oder rechteckig ausgebildet. Das Verhältnis aus diesen kleinsten freien Strömungsteilquerschnitten 14a zu der Wandungsstärke S des Rohrs 9 überschreitet nun einen vorgegebenen Maximalwert nicht (entsprechend groß ist die Wandungsstärke S bemessen bzw. entsprechend klein ist der kleinste freie Strömungsteilquerschnitt 14a bemessen). Dieser Maximalwert ist so festgelegt, dass die Strömungsteilquerschnitte 14a durch feste Reaktionsprodukte und Schmutz (z.B. Ruß usw.) signifikant verengt sind, wenn die Wandung des Rippenrohrs 9 durch korrosiven Angriff des aggressiven Kondensats unter eine gewisse Mindestgrenze geschwächt ist.

Wie aus Figur 3 ersichtlich wird, enthält der Heizkanal 14 jeweils oberhalb und unterhalb benachbarter Rippen 12 von benachbarten Windungen der Heizschlange 8 Toträume 14b. Dies unabhängig davon, ob die Rippen 12 benachbarter Windungen der Heizschlange 8 miteinander fluchten oder in Umfangsrichtung gegeneinander versetzt sind. Oberhalb und unterhalb der Rippen 12 bzw. in den Zwickeln zwischen benachbarten Rippen 12 und den Wandanordnungen 6 bzw. 13 finden sich diese Toträume. Hier können sich Reaktionsprodukte sammeln, ohne den Strömungsquerschnitt des Heizkanals 14 zu verengen. Weitere, größere Toträume 14c befinden sich unmittelbar zwischen benachbarten Windungen des Rippenrohrs 9 der Rohrschlange 8. Diese Toträume 14c dienen als Speicherräume zur Aufnahme entstehender Aluminiumverbindungen.

Die insoweit beschriebene Heizeinrichtung arbeitet wie folgt:
Während des Betriebs der Heizeinrichtung 1 fördert die Gebläseeinrichtung 2 ein Brenn-Luft-Gemisch zu dem Brenner 3. An dessen etwa zylindrischer Außenseite bilden sich somit Flammen aus, die den Innenraum 4 erwärmen und hier heiße Verbrennungsgase erzeugen. Diese werden, wie in Figur 2 durch Pfeile angedeutet ist, nun in den Heizkanal 14 geleitet. Die Verbrennungsgase teilen sich durch die Rippen 12 auf die einzelnen Teilflächen 14a des Heizkanals auf und durchströmen diesen im Wesentlichen vertikal absteigend. Im Gegenstrom, d.h. vertikal aufsteigend, wird der Fluidkanal 11 des Wärmetauschers 5 durch einen anfangs kalten Wärmeträger durchströmt. Das untere Ende des Wärmetauschers 5 ist somit relativ kalt (z.B. 30°C oder 40°C). Somit werden die Verbrennungsgase in den Heizkanal 14 deutlich unter 100°C abgekühlt. Sie geraten damit unter ihren Taupunkt. In den Verbrennungsgasen enthaltener Wasserdampf kondensiert somit vor allem an der Außenwand des Rippenrohrs 9, teilweise an den Rippen 12 und zu einem gewissen Teil evtl. noch an der äußeren Wandanordnung 13. Das entstehende Kondensat bildet Tropfen, die der Schwerkraft folgend nach unten fließen und letztendlich aus dem Heizkanal 14 in die Auffangschale 17 laufen.

Das Kondensat besteht im Wesentlichen aus Wasser, in dem sich bei der Verbrennung entstehende Stickoxide und/oder weitere Verbindungen wie beispielsweise Schwefeldioxid, das bei der Verbrennung entstehen kann, gelöst haben. Die Lösung ist äußerst sauer. Der PH-Wert liegt häufig im Bereich von 2-3. Somit unterliegen die Rippen und insbesondere die Wandung des Rippenrohrs 9 einem korrosiven Angriff. Das Kondensat ist ein Gemisch aus verschiedenen Säuren (schweflige Säure, Schwefelsäure, Salpetersäure, salpetrige Säure, Kohlensäure). Dieses Säurengemisch reagiert mit dem Rippenrohr 9, so dass die Wandung des Rippenrohrs 9 und die Rippen 12 einem flächigen Abtrag unterliegen. Aluminium löst sich allmählich dabei aber flächenhaft und nicht lediglich nur lokal in dem Kondensat. Die entstehenden Aluminiumsalze und evtl. Aluminiumhydrat haben ein wesentlich größeres Volumen als metallisches Aluminium, aus dem es hervorgegangen ist. Die entstehenden Reaktionsprodukte (Aluminiumverbindungen) sammeln sich somit in dem Heizkanal 14 an. Die Aluminiumverbindungen sind jedoch zumindest etwas mobil. Sie wachsen nicht unmittelbar als feste Kruste auf die korrodierte Wandung auf, sondern sie lagern sich vorzugsweise in Gebieten niedrigerer Strömungsgeschwindigkeit ab. Dies sind beispielsweise die Toträume 14b, die sich ober- und unterhalb der Rippen 12 finden, sowie die weiteren Toträume 14c, die sich unmittelbar zwischen benachbarten Rohren 9 finden. Zur Erläuterung ist der Totraum 14c in Figur 3 durch eine gestrichelte Linie eingegrenzt.

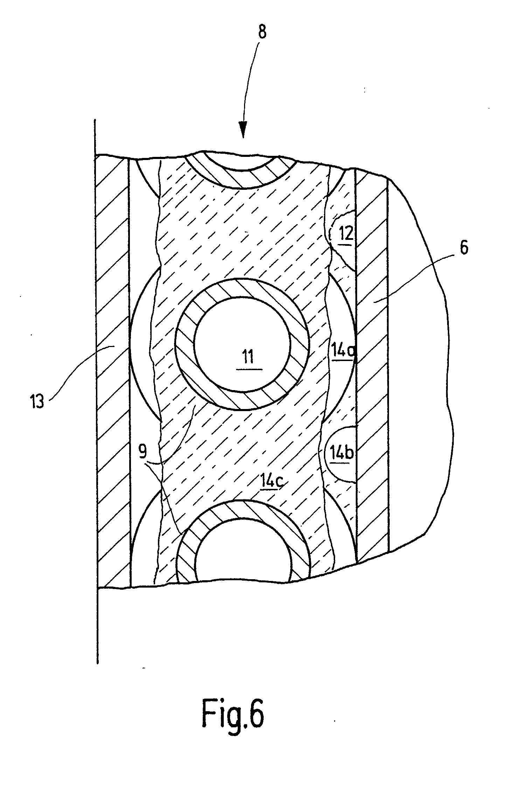

Der freie Strömungsteilquerschnitt 14a bleibt deshalb durch den Aluminiumabtrag zunächst völlig unbeeinträchtigt. Erst wenn die Toträume, die somit zugleich Reaktionsprodukte-Aufnahmeräume bilden, wie in Figur 6 veranschaulicht, weitgehend gefüllt sind, beginnen die Aluminium-Reaktionsprodukte, die Strömungsteilquerschnitte 14a zu verengen. Dieser Prozess dauert bei der angegebenen Wandungsdimensionierung, wie Figur 5 veranschaulicht, bis zu etwa 10 Jahren. Während dieser 10 Jahre wird die Wandung des Rippenrohrs 9 ständig abgetragen und zwar flächig, so dass an keiner Stelle Durchbrüche entstehen, wie sie andere Materialien (z.B. Edelstahl) in Form von Lochfraß zeigen. Damit und mit der Verlagerung der Reaktionsprodukte in die Toträume 14b, 14c bleibt über die Lebensdauer des Wärmetauschers 5 von 10 Jahren der Wirkungsgrad η konstant hoch. Zugleich ist die Abgastemperatur τ konstant niedrig, denn das Abgas wird von der Heizschlange 8 unter den Taupunkt abgekühlt.

Wenn jedoch die Toträume 14b, 14c mit Reaktionsprodukten gefüllt sind, beginnen die freien Strömungsteilquerschnitte 14a zumindest teilweise sich zu verengen. Sobald diese Verengung ein gewisses Maß erreicht hat, nimmt der Strömungswiderstand des Heizkanals 14 zu. Zugleich nimmt die Wärmeübertragung ab, denn das Abgas durchströmt den Heizkanal 14 nun wesentlich schneller und Teile der Rohrwand 9 sind nun mit Reaktionsprodukten bedeckt. Deshalb nimmt zu Ende der Lebensdauer die Abgastemperatur in kurzer Zeit (wenige Wochen) sehr stark zu. Die Zunahme erfolgt noch bevor die Rohrwand des Rippenrohrs 9 an irgendeiner Stelle eine kritische unbedingt erforderliche Mindeststärke unterschritten hätte. Das Unterschreiten einer Verschleißgrenze für die Wandungsstärke des Rippenrohrs 9 wird somit durch den steilen Temperaturanstieg der Abgastemperatur zum Lebensdauerende des Wärmetauschers 5 charakterisiert. Dieser Abgastemperaturanstieg ist in Figur 5 rechts veranschaulicht. Zugleich fällt der Wirkungsgrad η drastisch ab. Der Temperaturfühler 21 überwacht die Abgastemperatur ständig oder in regelmäßigen Abständen um zu verhindern, dass zu warme Kondensate über den Kondensatabfluss 18 in die Kanalisation gelangen. Steigt die Temperatur des Abgases, wie sie von dem Temperaturfühler 21 erfasst wird, über einen Grenzweit G (Figur 5) an, kann dies von der Überwachungsschaltung 22 als Kennzeichen für den fortgeschrittenen Verschleiß und das Erreichen der Verschleißgrenze des Wärmetauschers 5 gewertet werden. Die Überwachungsschaltung 22 kann somit zunächst ein Informationssignal (Warnton, Warnanzeige usw.) generieren. Außerdem kann bedarfsweise vorgesehen werden, dass die Überwachungsschaltung 22 die Gebläseeinrichtung 2 und somit den Brenner 3 stillsetzt.

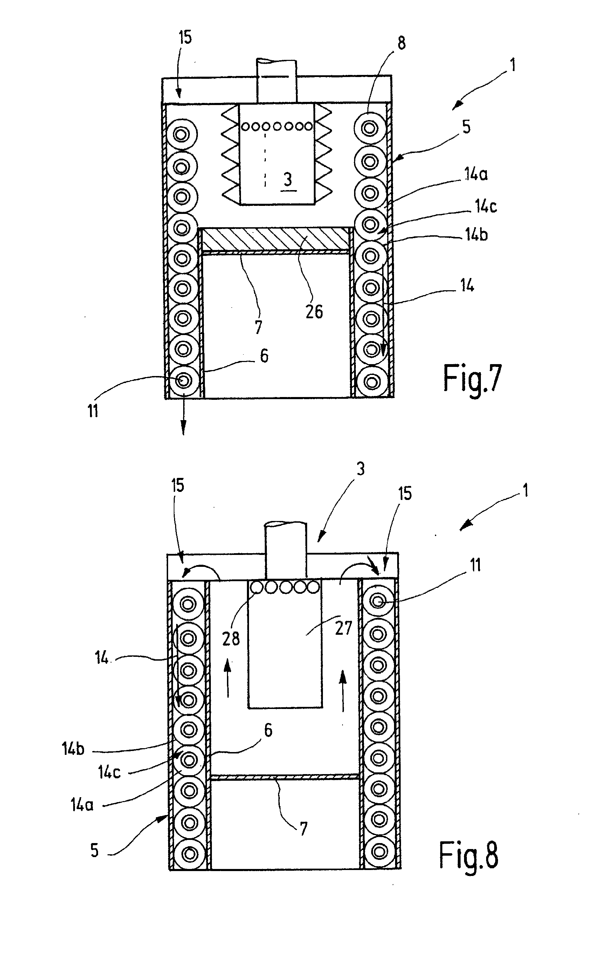

In Fig. 7 ist ausschnittsweise eine Brennwert-Heizeinrichtung 1 (für Gas) veranschaulich, die im Abgas enthaltenen Dampf zur Wärmegewinnung kondensiert. Der Unterschied zu der im Zusammenhang mit Fig. 2 beschriebenen Heizeinrichtung 1 liegt in der Ausbildung des Wärmetauschers 5. Dieser weist an dem unteren axialen (stirnseitigen) Ende des Brennraums 4 ein auf der Stirnwand 7 angeordnetes Wärme isolierendes Element 26 oder ein sonstiges Isoliermittel auf. Dieses hält die direkte Strahlungs- und Konvektionswärme von der Stirnwand 7 fern. Diese leitet dadurch keinen nennenswerten Wärmefluss in die Wandanordnung 6, deren Temperatur somit im Vergleich zu der Ausführungsform nach Fig. 1 geringer gehalten werden kann. Die Wandungstemperatur des Heizkanals 14 kann damit unter einem für die sichere Kondensation des im Abgas enthaltenen Dampfs gehalten werden. Anfallendes Kondensat fließt aus dem Heizkanal 14 nach unten aus. Auftretende Flächenkorrosion infolge des niedrigen pH-Werts des Kondensats führt zum allmählichen Wandabtrag und zur Auffüllung von Toträumen 14b, 14c. Ist der Korrosionsprozess so weit fortgeschritten, dass die Teilflächen 14a beginnen sich zu verengen, ist der Punkt E in dem Diagramm nach Fig. 5 erreicht und das Lebensdauerende wird angezeigt.

Fig. 8 veranschaulicht ausschnittsweise eine Heizeinrichtung 1 für Öl-Betrieb. Der Brenner 3 erzeugt einen axial gerichteten Brennstoff-Luft-Strom, der z.B. eine Flamme ausbildet. Zur Führung des Brennstoff-Luft-Strahls ist ein Flammenrohr 27 vorgesehen, das an seinem Fuß Abgas-Eintrittsöffnungen 28 zur Abgas-Rezirkulation aufweist. Abgas-Beimischung zu dem Brennstoff-Luft-Gemisch reduziert die NOₓ-Erzeugung. Die Wandanordnung 6 und die Stirnwand 7 sind vorzugsweise aus Edelstahl gefertigt. Für die Heizschlange 7 und die Wandanordnung 13 gelten die obigen Ausführungen (zu Fig. 2 und 7) entsprechend - sie sind z.B. aus Aluminium hergestellt. Die innere Wandanordnung 6 erstreckt sich vorzugsweise bis an das obere stirnseitige Ende des Innenraums 4. Zwischen der äußeren und der inneren Wndanordnung 13, 6 ist bei einer Stelle 15 ein ringförmiger Eingang des Heizkanals 14 ausgebildet.

Die Wärmeübertragung von dem Abgas auf die Heizschlange 8 ist nahezu rein konvektiv. Die Abkühlung der Abgase in dem Heizkanal 14 muss den Taupunkt nicht erreichen. In den Toträumen 14b, 14c sammeln sich Verschmutzungen, wie Ruß, feinste Asche, ölige Bestandteile und auch Aluminiumverbindungen an, die infolge der Reaktion heißer schwefelhaltiger Abgase mit dem Wandungsmaterial gebildet werden. Der Wärmetauscher 5 ist dabei so bemessen, dass die Toträume 14b, 14c die während der gesamten Lebensdauer anfallende Schmutzfracht und sämtliche nicht aus dem Heizkanal ausgetragenen Reaktionsprodukte aufnehmen können, ohne den Wärmeübergang zu stören oder den Strömungswiderstand zu erhöhen. Eine Reinigung der Heizschlange unterbleibt. Die Verschleißerkennung beruht auf der Abstimmung des Fassungsvermögens der Toträume mit der Reaktionsgeschwindigkeit der Wandungskorrosion sowie gegebenenfalls der Ablagerungsrate einer sonstigen Schmutzfracht.

Die Heizeinrichtung 1 weist einen Wärmetauscher 5 auf, der zumindest teilweise aus Aluminium besteht. Die Wandung des Heizkanals 14 ist so gestaltet, dass der Heizkanal freie Strömungsteilquerschnitte 14a und Aufnahmetaschen oder Toträume 14b, 14c für gegebenfalls anfallende Ablagerungen sowie Aluminiumverbindungen aufweist, wie sie durch sauren korrosiven Angriff des anfallenden Kondensats oder auch aus der Gasphase heraus entstehen. Die Taschen oder Toträume 14b, 14c sind so angeordnet, dass sie im Wesentlichen Teil des während der Lebensdauer des Wärmetauschers 5 anfallenden voluminösen Reaktionsprodukte aufnehmen. Dazu beträgt der Wandungsabstand benachbarter Windungen des Rippenrohrs etwa 20 bis 30 mm. Außerdem ist der kleinste freie Strömungsteilquerschnitt 14a im Verhältnis zu der Wandungsstärke des Heizkanals der zugleich die Wandungsstärke des Rippenrohrs ist, so festgelegt, dass der freie Strömungsteilquerschnitt 14a durch die Aluminium-Reaktionsprodukte und/oder Ablagerungen signifikant verengt ist, bevor die Wandung durchgeätzt ist.

Das Erreichen der Verschleißgrenze wird durch Überwachen der Abgastemperatur ermöglicht. Alternativ kann der Druckabfall über dem Heizkanal 14 überwacht werden.

## Patentansprüche

1. Wärmetauscher (5) für eine Heizeinrichtung (1),
mit wenigstens einem Fluidkanal (11) zur Erwärmung eines Wärmeträgerfluids und
mit wenigstens einem Heizkanal (14) für Wasserdampf enthaltende Verbrennungsgase zur Abkühlung derselben unter wenigstens teilweiser Kondensation des Wasserdampfs,
**dadurch gekennzeichnet,**
**dass** der Heizkanal (14) wenigstens abschnittsweise eine aus Aluminium oder einer Aluminiumlegierung bestehende Wandung (6, 9, 13) aufweist.

2. Wärmetauscher nach Anspruch 1, **dadurch gekennzeichnet, dass** die Wandung (6, 9, 13) des Heizkanals (14) vollständig aus Aluminium oder einer Aluminiumlegierung besteht.

3. Wärmetauscher nach Anspruch 1, **dadurch gekennzeichnet, dass** der Wärmetauscher (5) vollständig aus Aluminium oder einer Aluminiumlegierung besteht.

4. Wärmetauscher nach Anspruch 1, **dadurch gekennzeichnet, dass** das Verhältnis des kleinsten freien Strömungsteilquerschnitts (14a) des Heizkanals (14) zu der Wandungsstärke (S) des Heizkanals (14) kleiner als ein Maximalwert ist, der so festgelegt ist, dass der Strömungsteilquerschnitt (14a) durch die Reaktionsprodukte eines sauren Angriffs auf die Wandung (6, 9, 13) durch entstehendes Kondensat über eine vorgegebene Grenze hinaus verengt ist, bevor die Wandung (6, 9, 13) unter eine gegebene Mindeststärke geschwächt ist.

5. Wärmetauscher nach Anspruch 1, **dadurch gekennzeichnet, dass** der Heizkanal (14) mehrfach verzweigt ist.

6. Wärmetauscher nach Anspruch 1, **dadurch gekennzeichnet, dass** der Heizkanal (14) zwischen der Außenfläche des Rohrs (9) einer Rohrschlange (8) und einer zusätzlichen Wandanordnung (6, 13) festgelegt ist.

7. Wärmetauscher nach Anspruch 6, **dadurch gekennzeichnet, dass** die Wandanordnung (6, 13) eine die Rohrschlange (8) an ihrem Innenumfang berührende Wand (6) und eine die Rohrschlange (8) an ihrem Außenumfang berührende Wand (13) umfasst.

8. Wärmetauscher nach Anspruch 6, **dadurch gekennzeichnet, dass** das Rohr (9) ein Rippenrohr ist.

9. Wärmetauscher nach Anspruch 1, **dadurch gekennzeichnet, dass** zumindest das Rohr (8) aus Aluminium oder einer Aluminiumlegierung besteht.

10. Heizeinrichtung zur Erwärmung eines Wärmeträgerfluids, mit einem Wärmetauscher (5) nach einem der vorhergehenden Ansprüche.

11. Heizeinrichtung nach Anspruch 10, **dadurch gekennzeichnet, dass** eine Einrichtung (22) zur Überwachung der Durchströmung des Heizkanals (14) mit dem Heizkanal (14) in Verbindung steht, die in Abhängigkeit von der Durchströmung ein Verschleißerkennungssignal erzeugt.

12. Heizeinrichtung nach Anspruch 11, **dadurch gekennzeichnet, dass** die Einrichtung (22) zur Überwachung der Durchströmung des Heizkanals (14) eine Druckerfassungseinrichtung (25) ist und dass der Heizkanal (14) an eine Gebläseeinrichtung (2) angeschlossen ist.

13. Heizeinrichtung nach Anspruch 10, **dadurch gekennzeichnet, dass** eine Einrichtung (21) zur Überwachung der Abgastemperatur an dem Ausgang des Heizkanals (14) oder stromabwärts desselben vorgesehen ist, die in Abhängigkeit von der Durchströmung ein Verschleißerkennungssignal erzeugt.

14. Heizeinrichtung nach Anspruch 13, **dadurch gekennzeichnet, dass** das Verschleißerkennungssignal erzeugt wird, sobald die Abgastemperatur an dem Ausgang des Heizkanals (14) einen Grenzwert überschreitet.

15. Verfahren zur Verschleißerkennung eines Wärmetauschers einer Heizeinrichtung nach Anspruch 10, **dadurch gekennzeichnet,**
**dass** der Heizkanal (14) während der Lebensdauer des Wärmetauschers (5) nicht gereinigt wird, so dass sich Aluminiumverbindungen und/oder Verschmutzungen zunächst in Toträumen (14b, 14c) des Heizkanals (14) ansammeln und diesen erst nach Füllung der Toträume (14b, 14c) merklich verengen,
**dass** die Durchlässigkeit des Heizkanals (14) überwacht wird und
**dass** die Abnahme der Durchlässigkeit unter einen Mindestwert als Erreichen der Verschleißgrenze für den Wärmetauscher (5) gewertet wird.

16. Verfahren nach Anspruch 15, **dadurch gekennzeichnet, dass** die Temperatur des den Heizkanal (14) verlassenden Abgases als Indikator für die Durchlässigkeit des Heizkanals (14) gewertet wird.
